# EUROPÄISCHE PATENTSCHRIFT

(11) **EP 4 400 421 B1**
(45) Veröffentlichungstag und Bekanntmachung des Hinweises auf die Patenterteilung: **18.11.2026**
(21) Anmeldenummer: 23200265.9
(22) Anmeldetag: 28.09.2023
(51) Int. Cl.: B64C 31/036, B64D 17/30

(54) **LANDEHILFE FÜR EINEN FALLSCHIRMSPRINGER**
LANDING AID FOR A PARACHUTIST
AIDE À L'ATTERRISSAGE POUR UN SAUTEUR DE PARACHUTE

(30) Priorität: 12.01.2023 DE 202023100143 U
(43) Veröffentlichungstag der Anmeldung: 17.07.2024
(73) Patentinhaber: Lindnerhof-Taktik GmbH, 83661 Lenggries (DE)
(72) Erfinder: SCHWAGER, Martin, 82377 Penzberg (DE)
(74) Vertreter: Lorenz Seidler Gossel Part. mbB

(56) Entgegenhaltungen:
- EP-A1- 0 605 360
- EP-A1- 2 221 090
- EP-A1- 2 815 791
- WO-A1-00/20277
- DE-A1- 19 835 896
- DE-T2- 60 010 495
- FR-A- 1 138 001

## Beschreibung

Die vorliegende Erfindung betrifft eine Landehilfe für einen Fallschirmspringer, insbesondere für einen Tandem-Sprung oder die Landung mit schwerem Gepäck.

Beim Fallschirmspringen erfolgt die Landung, insbesondere bei einem Tandem-Sprung oder mit schwerem Gepäck, häufig in einer sitzenden Position. Je nach Untergrund kann dies für den Fallschirmspringer, d.h. die den Fallschirm benutzende Person, sehr unangenehm sein oder zu Verletzungen im Gesäßbereich oder im Bereich des unteren Rückens führen.

Aus Druckschrift EP 605360 B1 ist für den Bereich des Gleitschirmfliegens ein an einem Sitz des Gleitschirms angeordneter, vom Fahrtwind aufblasbarer Luftsack als Sicherheitsvorrichtung für Benutzer von Gleitfluggeräten bekannt. Dieser Luftsack ist an der Unter- und Rückseite des Sitzes angebracht, auf welchem der Gleitschirmflieger während des Fluges und der Landung sitzt. Vor der Landung wird über einen Auslösegriff eine Packvorrichtung entfernt und der Luftsack füllt sich durch den Fahrtwind. Hierfür ist an der Frontseite des Luftsackes eine Anströmöffnung vorgesehen, welche durch ihr Gewicht in die richtige Position gestellt werden soll, wobei die Anströmöffnung mit einem Schlauchventil ausgestattet ist.

Eine weitere Druckschrift aus dem Bereich des Gleitschirmfliegens ist EP 2 815 791 A1, welche eine Landehilfe gemäß dem Oberbegriff von Anspruch 1 zeigt.

Weiterer Stand der Technik ist aus Druckschriften EP 2 221 090 A1, WO 00/20277 A1, FR 1 138 001 A, DE 198 35 896 A1 und DE 600 10 495 T2 bekannt.

Aufgabe der vorliegenden Erfindung ist es, eine verbesserte Landehilfe zur Verfügung zu stellen. Diese Aufgabe wird in mehreren unabhängigen Aspekten durch die unabhängigen Ansprüche der vorliegenden Erfindung gelöst. Die vorliegende Erfindung beansprucht eine Landehilfe gemäß Anspruch 1 und eine Benutzung gemäß Anspruch 15.

Bevorzugte Ausgestaltungen der vorliegenden Erfindung sind Gegenstand der Unteransprüche.

Die vorliegende Erfindung umfasst eine Landehilfe für einen Fallschirmspringer, insbesondere für einen Tandem-Sprung oder die Landung mit schwerem Gepäck. Die Landehilfe umfasst einen Luftsack, welcher den Fallschirmspringer bei der Landung schützt. Der Luftsack weist eine Anströmöffnung auf, durch welche hindurch Luft in den Luftsack einströmen kann, um diesen mittels des Fahrtwindes zu füllen. Gemäß dem dritten Aspekt umfasst die Landehilfe Beinschlaufen, mit welchen Sie so an den Beinen des Fallschirmspringers befestigbar ist, dass sich der Luftsack nach dem Öffnen zwischen den Beinen des Fallschirmspringers hindurch nach hinten erstreckt.

Anders als gemäß dem Stand der Technik wird die Landehilfe daher nicht mehr an einem Sitz angeordnet, sondern zwischen den Beinen des Fallschirmspringers. Hierdurch wird die sperrige Sitzkonstruktion vermieden und die Landehilfe kann leichter bauen. Zudem ist die Landehilfe hierdurch auch für einen Tandemsprung geeignet. Hierfür muss der Luftsack lediglich lang genug sein, dass er nach dem Öffnen zwischen den Beinen beider Fallschirmspringer hindurch nach hinten reicht. Durch die Beinschlaufen wird die Landehilfe zudem sicher in ihrer Position am Fallschirmspringer fixiert.

Gemäß einer ersten Variante der vorliegenden Erfindung sind die Beinschlaufen an dem Luftsack angebracht. Die Beinschlaufen halten den Luftsack hierdurch beim Aufsetzen in Position. Ein Durchrutschen unter dem Fallschirmspringer (dem Hauptspringer oder dem Passagier) wird so verhindert.

Gemäß einer möglichen Ausgestaltung sind die Beinschlaufen an einem Bereich des Luftsackes angebracht, welcher erst durch den Staudruck innerhalb des Luftsacks seine Form erhält, und insbesondere an einem oder mehreren textilen Bereichen des Luftsackes angenäht. Hierdurch wird dieser Bereich des Luftsackes in Position gehalten.

Gemäß einer möglichen Ausgestaltung sind die rechte und die linke Beinschlaufe über einen Gurt verbunden. Hierdurch wird eine Belastung des Materials des Luftsackes vermieden, da die Verbindung über einen Gurt Kräfte aus den Beinschlaufen aufnimmt, wenn der Fallschrimspringer mit seinen Beinen an den Beinschlaufen nach außen zieht. Insbesondere werden Gurtelemente der rechten und die linken Beinschlaufe und deren Verbindung durch einen durchgängigen Gurt gebildet.

Der Gurt zur Verbindung der Beinschlaufen verläuft bevorzugt verdeckt innerhalb des Luftsacks. Bevorzugt ist der Gurt jeweils im Austrittsbereich fest mit dem Luftsack verbunden.

Gemäß einer zweiten Variante der vorliegenden Erfindung umfasst die Landehilfe eine fest mit dem Luftsack verbundene Packtasche, in welche der Luftsack verstaubar ist, wobei die Packtasche ein Auslöseelement umfasst, mit welchem die Packtasche während des Flugs geöffnet und der Luftsack während des Flugs aktiviert werden kann, wobei die Beinschlaufen unmittelbar an der Packtasche angeordnet sind.

Gemäß einem bevorzugten Aspekt umfasst die Landehilfe ein Federelement, durch welches die Anströmöffnung in der richtigen Position bezüglich des Luftstroms gehalten und/oder ein Auspackvorgang unterstützt wird.

Das bevorzugt vorgesehene Federelement erhöht daher die Sicherheit beim Benutzen der Landehilfe. Gemäß der ersten Variante hält das Federelement die Anströmöffnung in der richtigen Position bezüglich des Luftstroms. Anders als gemäß dem Stand der Technik wird zur Positionierung der Anströmöffnung daher nicht mehr allein deren Eigengewicht genutzt. Die Landehilfe kann hierdurch leichter ausgeführt werden. Zum anderen wird die Sicherheit bei der Positionierung der Anströmöffnung erhöht und verhindert, dass diese bei zu großem Fahrtwind aus dem Luftstrom gedrängt wird. Gemäß der zweiten Variante unterstützt das Federelement einen Auspackvorgang des Luftsacks. Auch hierdurch wird die Sicherheit bei der Benutzung der Landehilfe erhöht, da das Entfalten des Luftsacks durch das Federelement unterstützt und Fehler beim Auspacken bzw. Sich-Entfalten des Luftsacks vermieden werden.

Bevorzugt sind beide Varianten des ersten Aspektes in Kombination verwirklicht. In einer möglichen Ausgestaltung können hierfür für die erste und die zweite Variante unterschiedliche Federelemente eingesetzt werden, d.h. jeweils unterschiedliche Federelemente für die Positionierung der Anströmöffnung und die Unterstützung des Auspackvorgangs. Bevorzugt wird jedoch ein Federelement eingesetzt, welches die Funktion gemäß der ersten und der zweiten Variante aufweist, d. h. die Anströmöffnung in der richtigen Position bzgl. des Luftstroms hält und einen Auspackvorgang des Luftsacks unterstützt.

Gemäß einer möglichen Ausgestaltung der vorliegenden Erfindung ist das Federelement in den Luftsack integriert. Beispielsweise kann das Federelement in den Luftsack eingenäht sein.

Gemäß einer möglichen Ausgestaltung der vorliegenden Erfindung umfasst das Federelement einen oder mehrere erste Abstützbereiche, in welchen es sich an einem durch den Staudruck innerhalb des Luftsacks in Form gehaltenen Bereich des Luftsacks abstützt. Die Abstützung des Federelementes erfolgt daher gemäß dieser Ausgestaltung nicht an einem Bereich, welcher unmittelbar mit dem Fallschirmspringer in Verbindung steht, sondern mit dem Luftsack in einem Bereich, welcher durch den Staudruck innerhalb des Luftsacks in Form gehalten wird. Hierdurch kann das Federelement optimal positioniert werden.

Insbesondere ist der erste Abstützbereich des Federelementes an einem Bereich des Luftsacks befestigt, welcher aus textilen Elementen besteht. Beispielsweise ist der erste Abstützbereich im Bereich einer Naht zwischen zwei textilen Elementen des Luftsackes befestigt, und insbesondere dort mit dem Luftsack vernäht. Durch die Anordnung der ersten Abstützbereiche an einem entsprechenden Bereich des Luftsackes wird der Auspack- und Entfaltungsvorgang des Luftsackes unterstützt.

Gemäß einer möglichen Ausgestaltung der vorliegenden Erfindung umfasst das Federelement einen oder mehrere zweite Abstützbereiche, mit welchen es eine gegen den Druck des Fahrtwindes wirkende Gegenkraft auf die Anströmöffnung aufbringt. Hierdurch wird die Anströmöffnung gemäß dem ersten Aspekt in der richtigen Position bzgl. des Luftstroms gehalten.

Gemäß einer möglichen Ausgestaltung der vorliegenden Erfindung handelt es sich bei dem Federelement um ein Torsionsfederelement.

Gemäß einer möglichen Ausgestaltung der vorliegenden Erfindung besteht das Federelement aus Kunststoff. Insbesondere kann das Federelement eine oder mehrere aus einer Kunststoffplatte ausgeschnittene Torsionsfedern umfassen. Beispielsweise können die Torsionsfedern Z-förmig aus einer Kunststoffplatte ausgeschnitten sein. Hierdurch lassen sich relativ einfach Torsionsfedern bereitstellen. Bevorzugt sind die aus Kunststoff gefertigten Federelemente in den Luftsack eingenäht.

Gemäß einer möglichen Ausgestaltung der vorliegenden Erfindung umfasst das Federelement mindestens zwei parallel arbeitende Federn. Hierdurch wird die Sicherheit durch eine redundante Anordnung erhöht.

Gemäß einer möglichen Ausgestaltung der vorliegenden Erfindung umfasst das Federelement zwei Torsionsfedern, deren Torsionsachse sich jeweils entlang einer Oberkante der Anströmöffnung erstreckt, wobei die Torsionsfedern jeweils einen ersten Arm aufweisen, welcher sich entlang einer der beiden Seitenkanten der Anströmöffnung erstreckt. Hierdurch wird auf beiden Seiten der Anströmöffnung jeweils eine Gegenkraft auf die Anströmöffnung aufgebracht. Bevorzugt reichen die ersten Arme der Torsionsfedern bis zur Unterkante der Anströmöffnung und erstrecken sich weiter bevorzugt noch teilweise entlang der Unterkante. Zusammen umschließen die Torsionsfedern die Anströmöffnungen daher bevorzugt über mindestens 80 % ihres Umfangs.

Gemäß einer möglichen Ausgestaltung umfassen die Torsionsfedern jeweils einen zweiten Arm, welcher sich oberhalb der Anströmöffnung an einem Bereich des Luftsacks abstützt. Insbesondere stützt sich der zweite Arm bevorzugt an einem Bereich des Luftsackes ab, welcher erst durch den Staudruck innerhalb des Luftsackes in Form gehalten wird.

Gemäß einem weiteren bevorzugten Aspekt umfasst die Anströmöffnung ein Rückschlagventil, wobei das Rückschlagventil ein im inneren des Luftsacks angeordnetes Klappenventilelement aufweist, welches auf einer Seite scharnierartig mit dem Luftsack verbunden ist und bei Vorliegen eines entsprechenden Drucks im Luftsack die Anströmöffnung klappenförmig verschließt.

Anders als gemäß dem Stand der Technik wird daher kein Schlauchventil eingesetzt, sondern ein Klappenventil, über welches die Anströmöffnung bei entsprechendem Druck innerhalb des Luftsackes verschlossen wird. Ein solches Klappenventil hat sich als zuverlässiger erwiesen als das im Stand der Technik eingesetzte Schlauchventil.

Das Klappenventil dient insbesondere dazu, die Anströmöffnung des Luftsackes bei der Landung zu verschließen, so dass die Luft aus dem Luftsack nicht über die Anströmöffnung entweichen kann und der Luftsack daher seine Dämpfungsfunktion bei der Landung erfüllen kann.

Gemäß einer möglichen Ausgestaltung der vorliegenden Erfindung wird das Klappenventilelement durch ein textiles Element gebildet. Auch die scharnierartige Befestigung ergibt sich bevorzugt durch die Flexibilität eines textilen Materials, aus welchem das Klappenventilelement besteht und/oder mittels welchem das Klappenventilelement am Luftsack befestigt, insbesondere angenäht, ist.

Gemäß einer möglichen Ausgestaltung ist das textile Element in einem die Anströmöffnung umgebenden Bereich mit einem Stützelement verstärkt. Insbesondere kann das Stützelement aus Kunststoff bestehen und/oder in das textile Element eingenäht sein. Insbesondere umgibt das Stützelement die Anströmöffnung um ihren gesamten Umfang und/oder stützt sich von innen an einem die Anströmöffnung umgebenden Bereich des Luftsackes ab.

Bevorzugt ist das Klappenventilelement an seiner Oberkante mit dem Luftsack scharnierartig verbunden, insbesondere an diesem angenäht. Wie bereits beschrieben ergibt sich die scharnierartige Beweglichkeit des Klappenventilelementes bevorzugt durch die Flexibilität seines Materials.

Gemäß einer möglichen Ausgestaltung erstreckt sich quer über die Anströmöffnung ein Bandelement, welches verhindert, dass das Klappenventilelement durch die Anströmöffnung herausgedrückt wird. Das Bandelement verläuft bevorzugt in vertikaler Richtung quer über die Anströmöffnung. Insbesondere bei der Landung wirkt ein großer Innendruck auf das Klappenventilelement. Das Bandelement verhindert, dass das Klappenventilelement durch die großen Kräfte, welche auf dieses wirken, durch die Anströmöffnung hindurch nach außen gedrückt wird.

Gemäß einer möglichen Ausgestaltung ist das freie Ende des Klappenventilelements durch ein Bandelement gesichert, welches eine komplette Öffnung des Klappenventilelements verhindert. Insbesondere verläuft das Bandelement von einer Unterkante der Anströmöffnung zur Unterkante des Klappenventilelements.

Gemäß einer möglichen Ausgestaltung auch der ersten Variante der vorliegenden Erfindung umfasst die Landehilfe, wie bereits für die zweite Variante beschrieben, eine fest mit dem Luftsack verbundene Packtasche, in welche der Luftsack verstaubar ist, wobei die Packtasche ein Auslöseelement umfasst, mit welchem die Packtasche während des Flugs geöffnet und der Luftsack während des Flugs aktiviert werden kann.

Der Luftsack ist daher während des Freifalls immer und während des Fluges zunächst in der Packtasche verstaut und wird vor der Landung über das Auslöseelement aktiviert.

Gemäß einer möglichen Ausgestaltung sind an der Packtasche Gurtelemente zur Verbindung mit Beinschlaufen und/oder einem Gurtzeug des Gleitschirms angeordnet. Insbesondere kann daher die Befestigung der Landehilfe am Fallschirmspringer zumindest teilweise über die Packtasche erfolgen. Zum Anlegen der Landehilfe wird daher die Packtasche mit dem Fallschirmspringer verbunden. Durch das Auslösen des Luftsackes, welcher fest mit der Packtasche verbunden ist, ist auch der Luftsack mit dem Fallschirmspringer verbunden.

Die Verbindung der Landehilfe beziehungsweise der Packtasche mit dem Fallschirmspringer kann zusätzlich dadurch erfolgen, dass die Landhilfe beziehungsweise die Packtasche mit dem Gurtzeug des Fallschirmspringers, verbunden wird. Hierzu können an der Landehilfe beziehungsweise an der Packtasche entsprechende Gurtelemente und/oder Schnallen vorgesehen sein. Die Befestigung kann beispielsweise an vorhandenen Schlaufen und/oder Ösen des Gurtzeugs im Bereich der Hüfte erfolgen.

Gemäß einer möglichen Ausgestaltung wird die Packtasche in einem Bereich vor oder unterhalb des Schrittes des Fallschirmspringers am Fallschirmspringer befestigt. Nach dem Auslösen öffnet sich der Luftsack bevorzugt nach unten hin und erstreckt sich so zwischen den Beinen des Fallschirmspringers hindurch nach hinten.

Gemäß einer möglichen Ausgestaltung der vorliegenden Erfindung umfasst das Auslöseelement ein Bandelement, welches im verpackten Zustand innerhalb der Packtasche um den Luftsack herumgeht und diesen beim Öffnen aus der Packtasche herausdrückt.

Gemäß einer möglichen Ausgestaltung umfasst das Auslöseelement ein Sicherungselement, welches die Packtasche im geschlossenem Zustand sichert. Bevorzugt geht das Sicherungselement in gepacktem Zustand durch Schlaufen hindurch, welche durch Ösen der Packtasche hindurchgeschoben sind und die Packtasche in geschlossenem Zustand sichern. Insbesondere kann es sich bei dem Sicherungselement um ein Drahtelement oder um ein aus Kunststoff gefertigtes Stabelement handeln, insbesondere in Form eines elastischen, beispielsweise gebogenen Stabes. Bevorzugt umfasst das Auslöseelement sowohl das Sicherungselement als auch das Bandelement. Das Sicherungselement sichert die Packtasche in geschlossenem Zustand, wobei diese Sicherung durch Ziehen an dem Sicherungselement beziehungsweise Entfernen des Sicherungselementes von der Packtasche gelöst wird, so dass sich der Luftsack entpacken beziehungsweise entfalten kann.

Gemäß einer möglichen Ausgestaltung der vorliegenden Erfindung ist der Luftsack an einer Unterkante der nach unten offenen Packtasche angeordnet. Er kann sich so aus der Packtasche heraus nach unten hin öffnen.

Bevorzugt ist die Anströmöffnung unmittelbar unterhalb der Unterkante der Packtasche im Luftsack angeordnet und kann daher beim Einpacken des Luftsackes in die Packtasche unmittelbar auf einer Seitenwand der Packtasche aufgelegt werden. Zum einen stellt dies sicher, dass bei gepacktem Luftsack keine Luft in die Anströmöffnung eindringen kann. Zum anderen klappt der Luftsack mit der richtig positionierten Anströmöffnung hierdurch unmittelbar aus der Packtasche heraus, so dass sich die Anströmöffnung im Fahrtwind befindet.

Das gemäß dem ersten Aspekt vorgesehene Federelement wird bevorzugt in gespanntem Zustand, bei welchem die Federarme gegeneinander gefaltet sind, in der Packtasche verstaut. Es sichert hierdurch neben der richtigen Positionierung der Anströmöffnung im Luftstrom auch das Entfalten des Luftsackes im Bereich zwischen Packtasche und Anströmöffnung.

Gemäß einer möglichen Ausgestaltung der vorliegenden Erfindung ist die Packtasche durch eine Lasche verschließbar. Bevorzugt umfasst diese Lasche eine oder mehrere Ösen, durch welche Schlaufen der Packtasche hindurchgeführt und über das Sicherungselement gesichert werden. Durch Abziehen des Sicherungselementes wird so die Packtasche geöffnet.

Gemäß einer möglichen Ausgestaltung der vorliegenden Erfindung ist die Anströmöffnung in ihrem Randbereich mit einem Stützelement verstärkt. Insbesondere kann es sich bei dem Stützelement um ein Kunststoffelement handeln. Gemäß einer möglichen Ausgestaltung ist das Stützelement in den Luftsack eingenäht. Das Stützelement kann die Anströmöffnung um ihren gesamten Umfang herum umgeben.

Gemäß einer möglichen Ausgestaltung der vorliegenden Erfindung weist der Luftsack eine oder mehrere Ausströmöffnungen auf, welche bevorzugt in einem hinteren und/oder oberen Bereich des Luftsacks angeordnet sind. Diese sorgen während der Landung dafür, dass sich in dem Luftsack kein übergroßer Druck bildet, welcher diesen zerreißen könnte. Weiterhin sorgen sie während des Landeanflugs für eine sichere Füllung des Luftsacks aufgrund des geringfügigen, durch den Luftsack hindurch entstehenden Luftstrom, und/oder bei der Landung einer wirksamen Dämpfung durch ein kontrolliertes Ablassen von im Luftsack enthaltener Luft.

Gemäß einer bevorzugten Ausgestaltung sind die eine oder mehreren Ausströmöffnungen nicht verschließbar. Hierdurch wird sichergestellt, dass die Funktion der Ausströmöffnungen bei der Landung nicht durch eine Fehlbedienung verhindert wird.

Gemäß einer bevorzugten Ausgestaltung sind die eine oder mehreren nicht verschließbaren Öffnungen an einer Ober- und/oder Rückseite des Luftsacks angeordnet, um ein Überdecken durch den Untergrund auszuschließen. Insbesondere sind die nicht verschließbaren Öffnungen höher angeordnet als die Mitte der Rückseite des Luftsacks. Insbesondere können die Öffnungen im Bereich einer Oberkante des Luftsacks angeordnet sein, insbesondere im Bereich einer hinteren Oberkante.

Die nicht verschließbaren Öffnungen können dadurch gebildet sein, dass die Rückseite und die Oberseite bildende textile Elemente des Luftsacks im Bereich der Öffnungen nicht miteinander verbunden sind.

Die Landehilfe kann mit einer oder mehreren Ausströmöffnungen des Luftsackes, welche nicht verschließbar ist oder sind, ausgestaltet sein.

Gemäß dem vierten Aspekt ist vorgesehen, dass der Luftsack eine oder mehrere Ausströmöffnungen aufweist, welche nicht verschließbar ist oder sind. Bevorzugt sind die eine oder mehreren Ausströmöffnungen in einem hinteren Bereich des Luftsacks angeordnet.

Bevorzugt sind die eine oder mehreren nicht verschließbaren Öffnungen so ausgestaltet, wie dies oben beschrieben wurde.

In einer möglichen Ausgestaltung der vorliegenden Erfindung ist der erfindungsgemäße Luftsack so ausgestaltet, dass er allein durch den Fahrtwind aufgeblasen wird. Insbesondere sorgt die durch die Anströmöffnung in den Luftsack einströmende Luft dafür, dass der Luftsack im Landeanflug aufgeblasen wird.

Bevorzugt ist der Luftsack aus textilem Material gefertigt. Insbesondere kann der Luftsack aus Gewebematerial gefertigt sein.

Die Packtasche ist bevorzugt aus einem textilen Material, insbesondere aus einem Gewebematerial, gefertigt.

Die Befestigung der Landehilfe am Fallschirmspringer erfolgt bevorzugt über Gurtelemente.

Die vorliegende Erfindung umfasst weiterhin die Benutzung einer Landehilfe, wie sie oben beschrieben wurde, zum Schutz eines Fallschirmspringers bei der Landung, insbesondere bei einem Tandemsprung oder einer Landung mit schwerem Gepäck.

Bevorzugt wird der Luftsack vor der Landung geöffnet. Alternativ oder zusätzlich landet der Fallschirmspringer bevorzugt sitzend auf dem Luftsack. Der Luftsack schützt bevorzugt das Gesäß und/oder den unteren Rücken des Fallschirmspringers.

Bevorzugt ist der Luftsack so dimensioniert, dass zwei aneinandergeschnallte Fallschirmspringer bei einem Tandemsprung beide auf dem Luftsack zu sitzen kommen.

Die vorliegende Erfindung wird nun anhand eines Ausführungsbeispieles sowie Zeichnungen näher beschrieben.

Dabei zeigen:
- Fig. 1:: die erfindungsgemäße Landehilfe im aufgeblasenen Zustand bei einem Landeanflug,
- Fig. 2:: die erfindungsgemäße Landehilfe im gepackten Zustand, wobei die Landehilfe am Fallschirmspringer befestigt ist,
- Fig. 3:: die Landehilfe im aufgeblasenen Zustand ohne die Fallschirmspringer,
- Fig. 4:: eine Detailansicht des Luftsacks im aufgeblasenen Zustand mit der Anströmöffnung,
- Fig. 5:: eine weitere Detailansicht des Bereiches der Anströmöffnung mit dem erfindungsgemäßen Federelement, und
- Fig. 6: eine Detailansicht des hinteren Bereichs des Luftsacks mit den Ausströmöffnungen.

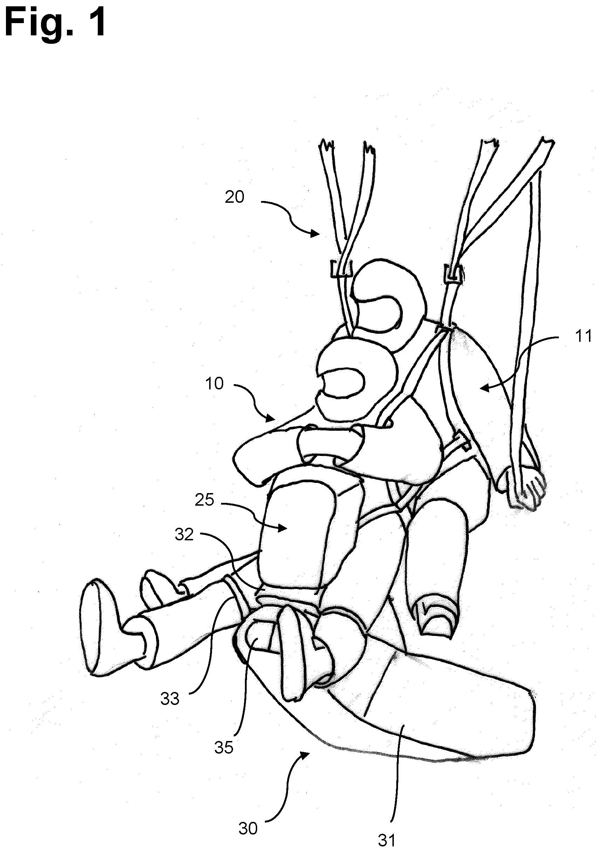

Fig. 1 zeigt ein Ausführungsbeispiel einer erfindungsgemäßen Landehilfe im Einsatz. In Fig. 1 wird die Landehilfe 30 für ein Tandem-Sprung der beiden Fallschirmspringer 10 und 11, welche hierfür über das Gurtzeug 20 miteinander verzurrt sind, eingesetzt. Die Landehilfe 30 ist am vorderen Fallschirmspringer 10 befestigt, d.h. bei einem Tandemsprung bei dem vorne fliegenden Passagier.

Die Landehilfe 30 umfasst den Luftsack 31, auf welchem die beiden Fallschirmspringer bei der Landung zu Sitzen kommen. Der Luftsack schützt hierdurch das Gesäß sowie den unteren Rückenbereich der Fallschirmspringer bei der Landung.

Der Luftsack umfasst eine Anströmöffnung 35, durch welche er mittels des Fahrtwindes mit Luft gefüllt wird. Während des Freifalls und des ersten Teils des Fluges mit geöffnetem Fallschirm ist der Luftsack 31 zunächst in einer Packtasche 32 verstaut. Zur Vorbereitung der Landung wird die Landehilfe aktiviert, indem der Luftsack 31 aus der Packtasche 32 ausgeklappt wird. Die Anströmöffnung 35 stellt sich in den Fahrtwind und sorgt für das Aufblasen des Luftsacks.

Wie in Fig. 1 zu erkennen wird die Landehilfe so an dem Fallschirmspringer 10 befestigt, dass sie sich im aufgeblasenen Zustand zwischen den Beinen des Fallschirmspringers hindurch nach hinten erstreckt. Gemäß der vorliegenden Erfindung umfasst die Landehilfe 30 Beinschlaufen 33, mit welchen sie am Fallschirmspringer 10 befestigt ist. Die Beinschlaufen sichern die Position der Packtasche 32 vor der Aktivierung der Landehilfe und des Luftsackes 31 im aufgeblasenen Zustand.

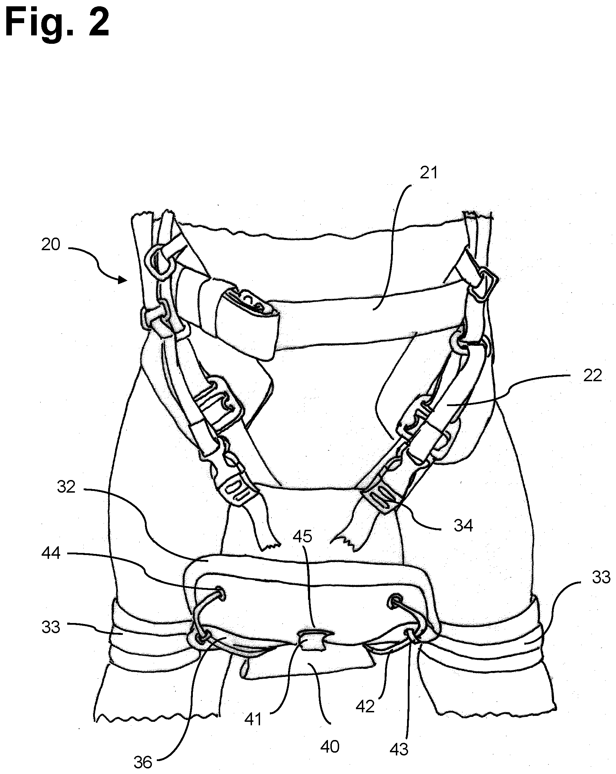

Die Landehilfe ist vor der Aktivierung im Bereich vor oder unterhalb des Schrittes des Fallschirmspringers 10 an diesem befestigt, und insbesondere wie in Fig. 2 ersichtlich mit dem Gurtzeug 20 des Fallschirmspringers verbunden.

Hierdurch kann der Fallschirmspringer 10 vor seinem Bauch noch als zusätzliches, von der Landehilfe unabhängiges Element einen Tragsack 25 transportieren. Die Landehilfe schützt auch das Gepäck des Fallschirmspringers wie den Tragsack 25 bei der Landung.

Die erfindungsgemäße Landehilfe 30 kann auch für einen Einzelsprung eingesetzt werden.

Fig. 2 zeigt die Landehilfe 30 im gepackten Zustand. Hierbei ist der Luftsack 31 in der Packtasche 32 verpackt. Neben den bereits erwähnten Beinschlaufen 33 umfasst die Landehilfe weiterhin Gurtelemente und/oder Schnallen 34, mit welchen sie mit dem Gurtzeug 20 des Fallschirmspringers verbunden werden kann.

Insbesondere sind Gurtelemente und/oder Schnallen 34 vorgesehen, mit welchen die Packtasche 32 an ihrer Oberkante über die Gurte 22 mit den Gurtelementen 21 des Gurtzeugs 20 verbunden werden kann. Die Befestigung der Landehilfe erfolgt daher an vorhandenen Schlaufen und Ösen des Gurtzeugs 20 des Fallschirmspringers im Bereich der Hüfte. Die Gurte 22 sind Schlaufen und Teil der Landehilfe, die in vorhandene Schlaufen oder Ringe des Gurtzeugs 20 eingeschlauft werden.

Die Beinschlaufen 33 werden oberhalb des Knies mit den Beinen des Fallschirmspringers verbunden. Die Packtasche ist hierdurch an vier Punkten mit dem Fallschirmspringer verbunden.

Die Packtasche 32 weist an ihrer Unterkante eine Öffnung auf, in welche hinein der Luftsack in die Packtasche eingefaltet wird. Im gepackten Zustand ist diese Öffnung durch eine Lasche 36 verschlossen. Die Lasche ist im verschlossenen Zustand über ein Sicherungselement 42 gesichert. Hierbei handelt es sich um einen Kunststoffbügel, welcher durch Schlaufen 43 hindurch geschoben ist. Die Schlaufen 43 gehen wiederum durch Ösen in der Lasche 36, so dass das Sicherungselement 42 die Lasche 36 in ihrer geschlossenen Stellung sichert.

Die Landehilfe weist ein Auslöseelement 40 auf, an welchem das Sicherungselement 42 befestigt ist. Durch Ziehen des Auslöseelementes wird der Bügel 42 aus den Schlaufen 43 herausgezogen und die Packtasche geöffnet. Die freien Enden des Bügels 42 sind im gepackten Zustand in Ösen 44 der Packtasche eingeschoben.

An dem Auslöseelement 40 ist weiterhin ein Gurtelement 41 angeordnet, welches das Entpacken des Luftsackes aus der Tasche unterstützt. Das Gurtelement 41 verläuft hierfür im gepackten Zustand innerhalb der Packtasche um den eingepackten Luftsack herum. Durch Ziehen an dem Gurtelement wird der Luftsack aus der Packtasche 32 herausgedrückt. Hierfür verläuft das Gurtelement 41 durch einen Schlitz 45 an der freien Vorderkante der Packtasche 42 in diese hinein und ist mit seinem inneren Ende innerhalb der Packtasche an deren hinterer Unterkante befestigt.

Durch Ziehen an dem Auslöseelement 40 wird daher zum einen das Sicherungselement 42 betätigt, um die Sicherung der Packtasche zu lösen, und zum anderen das Gurtelement 41, über welches der Luftsack aus der nun geöffneten Packtasche nach unten hinausgedrückt wird.

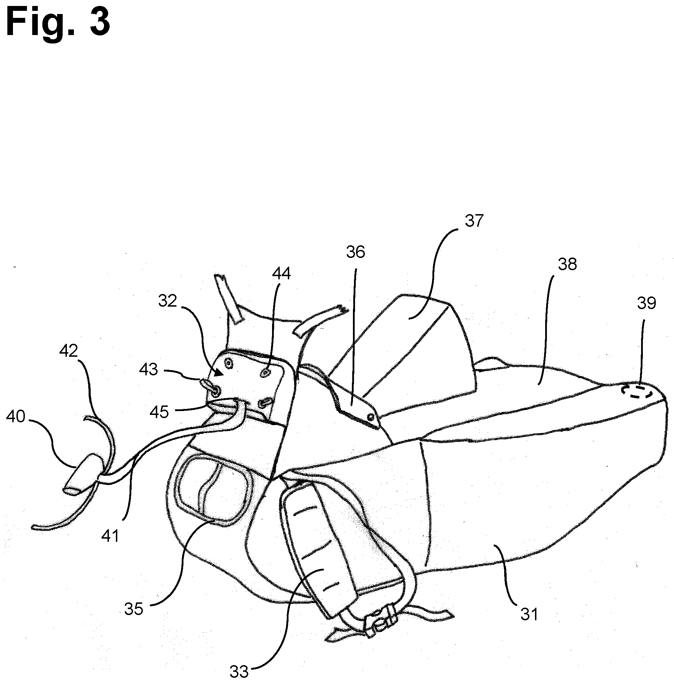

Fig. 3 zeigt die Landehilfe im aktivierten, aufgeblasenen Zustand. Wie in Fig. 3 ersichtlich ist die Anströmöffnung 35 unterhalb der nach unten offenen Packtasche am Luftsack angeordnet. Im gepackten Zustand wird die Anströmöffnung 35 hierbei unmittelbar auf die hintere Innenseite der Packtasche verpackt und die weiteren Stoffbahnen des Luftsackes dann bspw. ziehharmonikaförmig in den verbleibenden Rauminhalt der Packtasche eingepackt. Beim Aktivieren der Landehilfe klappt hierdurch der gesamte Luftsack aus der Packtasche heraus, wobei die Anströmöffnung 35 unterhalb der Packtasche in den Fahrtwind gestellt wird und hierdurch den Luftsack 31 füllt.

Ebenfalls in Fig. 3 zu sehen ist das Auslöseelement 40 mit dem Sicherungselement 42 und dem Gurtelement 41, die Schlaufen 43, welche dann durch an der Lasche 36 angeordnete Ösen hindurchgehen, so wie die Ösen 44 für die Enden des Sicherungselementes 42.

Wie in Fig. 3 ersichtlich sind die Beinschlaufen 33 am Luftsack 31 befestigt, insbesondere an einem Bereich des Luftsackes, welcher erst durch den Staudruck im Inneren des Luftsackes seine Form erhält. Insbesondere sind die Beinschlaufen 33 zwischen zwei durch textile Bahnen gebildeten Bereichen des Luftsacks 31 angeordnet. Hierdurch wird der Luftsack in seiner aufgeblasenen Position über die Beinschlaufen 33 am Träger gesichert. Der Luftsack wird so in die Packtasche 32 gepackt, dass die Beinschlaufen aus dieser herausschauen.

Alternativ wäre es denkbar, die Beinschlaufen 33 auch unmittelbar an der Packtasche 32 anzuordnen.

Die Gurtelemente 34 zum Befestigen der Packtasche 32 am Gurtzeug 20 des Fallschirmspringers sind im Ausführungsbeispiel an einer weiteren Lasche, welche oberhalb der Packtasche 32 verläuft und mit dieser verbunden ist, angeordnet. Sie könnten jedoch auch unmittelbar an der Packtasche selbst befestigt sein, insbesondere mit dieser vernäht sein.

Wie in Fig. 3 erkennbar weist der Luftsack 31 im aufgeblasenem Zustand eine im Wesentlichen längliche Form auf, um sich so zwischen den Beinen des Fallschirmspringers nach hinten erstrecken zu können.

Im Ausführungsbeispiel weist der Luftsack 31 in einem mittleren Bereich ein nach oben hin auskragendes Sitzelement 37 auf, auf welchem der vordere Fallschirmspringer 10 und hinter welchem der zweite Fallschirmspringer 11 zu Sitzen kommt. Hinter dem Sitzelement 37 ist hierfür ein niedrigeres, breiteres Element des Luftsackes vorgesehen. Die genaue Form des Luftsackes kann jedoch je nach konkretem Einsatzzweck auch anders ausgestaltet werden.

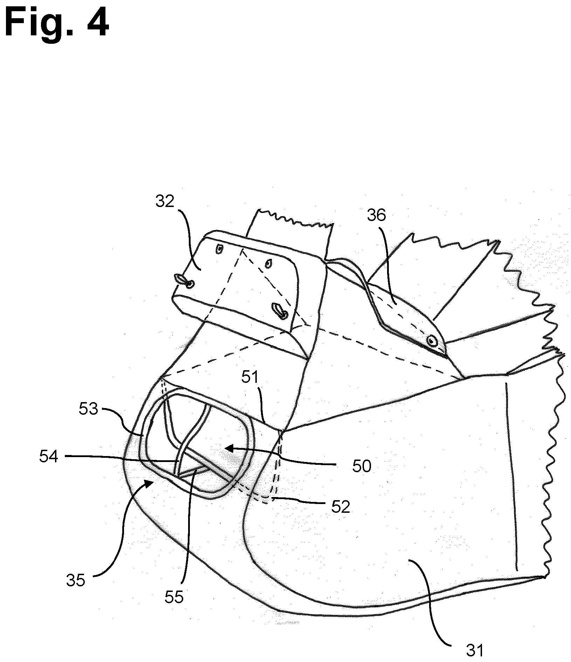

Fig. 4 zeigt die Ausgestaltung des an der Anströmöffnung 35 vorgesehenen Rückschlagventils gemäß dem zweiten Aspekt. Dabei ist ein Klappventilelement 50 in Form einer Ventilklappe vorgesehen, welche im Bereich 51 oberhalb der Anströmöffnung scharnierartig mit dem Luftsack 31 verbunden ist. Die Ventilklappe 50 verschließt die Anströmöffnung 35 bei entsprechendem Staudruck innerhalb des Luftsackes von innen, indem sie sich klappenartig von innen über die Anströmöffnung 35 legt.

Die Ventilklappe 50 ist aus einem textilen Material gefertigt, dessen Flexibilität auch die Scharnierfunktion zur Verfügung stellt. Die Ventilklappe 50 weist ein Stützelement 52 auf, welches den Randbereich der Ventilklappe verstärkt und welches größer ist als die Anströmöffnung 35. Das Stützelement kann mit dem Rand der Ventilklappe 35 vernäht bzw. in diesen eingenäht sein.

Die Ventilklappe 50 stützt sich im geschlossenen Zustand auf dem die Anströmöffnung 35 umgebenden Bereich des Luftsackes 31 ab, wobei sich insbesondere der durch das Stützelement 52 verstärkte Bereich auf dem Luftsack abstützt, wenn das Ventil geschlossen wird.

Die Anströmöffnung 35 weist bevorzugt ebenfalls einen verstärkten Kantenbereich 53 auf. Insbesondere ist auch hier ein Stützelement vorgesehen, welches mit dem Randbereich 53 der Anströmöffnung 35 vernäht bzw. in diesen Randbereich eingenäht ist.

Die Stützelemente 52 und 53 sind bevorzugt aus Kunststoff gefertigt. Insbesondere handelt es sich um Plastikringe. Die Stützelemente könne aus einer Kunststoffplatte ausgeschnitten sein.

Ein Bandelement 54 verläuft quer über die Anströmöffnung 35, insbesondere von einer Oberkante zu einer Unterkante der Anströmöffnung 35. Das Bandelement 54 verhindert, dass die Ventilklappe 50 von innen durch die Anströmöffnung 35 nach außen herausgedrückt wird.

Weiterhin ist die freie Unterkante der Ventilklappe 50 über ein Bandelement 55 in einer maximal geöffneten Position gesichert. Das Bandelement 55 steht mit einem Ende mit der Unterkante der Ventilklappe 52, mit dem anderen Ende mit der Unterkante der Anströmöffnung 35 in Verbindung. Das Gurtelement 55 verhindert dabei, dass die Ventilklappe durch die einströmende Luft zu stark geöffnet wird und sich an der Oberseite des Luftsackes 31 anlegt. Insbesondere wird die Ventilklappe 52 über das Gurtelement 55 in einer maximal geöffneten Position gesichert, welche sicherstellt, dass bei einem entsprechenden Gegendruck innerhalb des Luftsackes 31 das Klappenventil sicher geschlossen wird.

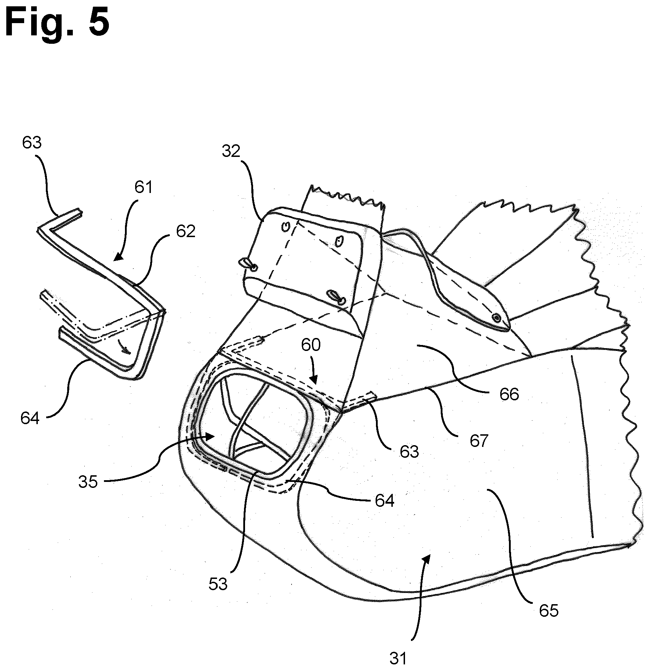

Fig. 5 zeigt den Einsatz eines Federelementes 60 gemäß dem ersten Aspekt der vorliegenden Erfindung. Das Federelement 60 dient im Ausführungsbeispiel zunächst dazu, die Anströmöffnung 35 im Fahrtwind zu positionieren und einen Gegendruck zu erzeugen, welcher verhindert, dass die Anströmöffnung durch den Fahrtwind in eine ungünstige Position gedrückt wird, in welcher sie nicht mehr gut angeströmt wird. Weiterhin hat das Federelement die Funktion, beim Aktivieren der Landehilfe das Entfalten des Luftsackes aus seiner eingepackten Position zu unterstützen. In alternativen Ausgestaltungen könnte das Federelement auch nur eine der beiden Funktionen aufweisen.

Das Federelement 60 umfasst im Ausführungsbespiel zwei Torsionsfedern 61. Diese erstrecken sich mit einem ersten Federarm 64 jeweils auf gegenüberliegenden Seiten der Anströmöffnung 35 um diese herum. Ein zweiter Federarm 63 stützt sich dagegen am Luftsack 65 ab. Zwischen dem ersten und dem zweiten Federarm erstreckt sich der Torsionsfederbereich 62, welcher für beide Torsionsfedern 61 entlang der Oberkante der Anströmöffnung 35 von einer Seite der Anströmöffnung zur gegenüberliegenden Seite verläuft.

Die Torsionsfedern 61 sind mit dem Luftsack vernäht und insbesondere in diesen eingenäht.

Der zweite Federarm 63 stützt sich jeweils auf Bereichen des Luftsackes 31 ab, welche erst durch den Staudruck innerhalb des Luftsackes ihre Form erhalten, und ist insbesondere zwischen textilen Bahnen 65 und 66 des Luftsackes angeordnet. Im Ausführungsbeispiel ist der zweite Federarm jeweils mit einem Nahtbereich 67 zwischen den textilen Elementen 66 und 65 des Luftsacks verbunden und insbesondre entlang der Naht 67 mit diesem vernäht. Das textile Element 66 verbindet hierbei das textile Element 65 mit der Packtasche 32.

Nach dem Einklappen der Anströmöffnung 35 in die Packtasche 32, bei welcher die Unterkante der Anströmöffnung 35 zuerst in das Innere der Packtasche eingeschoben wird, schauen die zweiten Arme 63 des Federelementes 60 zunächst aus der Packtasche heraus. Sie werden nun durch Aufeinanderfalten des Materials des Luftsackes auf die ersten Arme 64 gedrückt und die Feder hierdurch in gespanntem Zustand in den Packsack 32 eingefaltet.

Nach dem Öffnen der Packtasche 32 und dem Herausdrücken des Luftsacks aus der Packtasche 32 durch das Auslöseelement sorgt das Federelement 60 dafür, dass sich der Luftsack sofort nach hinten auffaltet. Weiterhin sorgt das Federelement nach dem Öffnen dafür, dass ein Gegendruck auf die Anströmöffnung 35 aufgebracht wird, welche ein Wegklappen der Anströmöffnung nach unten hinten verhindert.

Die Torsionsfedern 61 sind im Ausführungsbeispiel aus Kunststoff gefertigt. Sie sind aus einer ebenen Kunststoffplatte ausgeschnitten und weisen im nicht gespannten Zustand, welcher in Fig. 5 links gestrichelt dargestellt ist, im Wesentlichen die Form eines Z auf. Im gespannten Zustand wird dagegen der die Anströmöffnung 35 umgebende erste Bügel 64 nach unten gedrückt, wie dies durch den in Fig. 5 dargestellten Pfeil gezeigt ist.

Der erste Bügel 64 umgibt die Anströmöffnung im Ausführungsbeispiel nicht nur entlang der Querseiten, sondern auch entlang ihrer Unterkante in etwa bis zur Mitte. Die beiden Torsionsfedern 61 umgeben daher über ihre jeweiligen ersten Bügel 64 sowie den Torsionsbereich 62 die Anströmöffnung 35 im Wesentlichen komplett. Sie sind bevorzugt so dimensioniert, dass sie den verstärkten Kantenbereich 53 der Anströmöffnung 35 umgeben.

Wie in Fig. 3 weiterhin erkennbar umfasst der Luftsack 31 Ausströmöffnungen 39, welche im Ausführungsbeispiel in einem hinteren oberen Bereich des Luftsacks angeordnet sind. Diese verhindern ein Platzen des Luftsackes 31 sowie eine kontrollierte Dämpfung bei der Landung, indem sie das Entweichen einer gewissen Menge von Luft ermöglichen.

Die Auslassöffnungen 39 sind im Ausführungsbeispiel so ausgestaltet, dass sie nicht geschlossen werden können. Hierdurch werden Fehlbedienungen verhindert. Die Querschnittsfläche der Auslassöffnungen 39 ist so bemessen, dass sich der Luftsack 31 sicher füllt und bei der Landung die gewünschte Dämpfungswirkung aufweist, ohne dass der Luftsack 31 platzt.

Die Ausströmöffnungen sind im Bereich der Oberkante oder einer Oberseite des Luftsacks angeordnet, so dass sie bei der Landung auch durch den Kontakt mit dem Boden nicht verschlossen werden können.

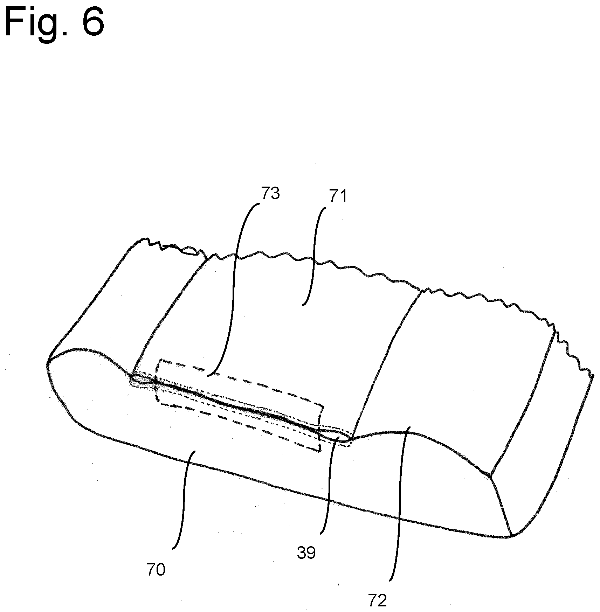

Die im Ausführungsbeispiel eingesetzte Ausgestaltung der Ausströmöffnungen 39 ist in Fig. 6 gezeigt. Die Auslassöffnungen 39 sind hierbei im Bereich der Oberkante 72 zwischen einer Rückseite 70 und einer Oberseite 71 des Luftsacks vorgesehen und insbesondere zwischen den entsprechenden textilen Elementen, welche die Rückseite 70 und einer Oberseite 71 des Luftsacks bilden, vorgesehen. Im Ausführungsbeispiel sind die entsprechenden textilen Elemente im Bereich der Ausströmöffnungen 39 nicht miteinander verbunden. Insbesondere sind die Stoßkanten der textilen Elemente im Bereich der Ausströmöffnungen 39 nicht verbunden oder vernäht. Dies wird im Ausführungsbeispiel dadurch verwirklicht, dass ein Verbindungselement 73, welches die beiden textilen Elemente im Bereich zwischen den Ausströmöffnungen 39 verbindet, indem es mit beiden textilen Elementen vernäht ist, im Bereich der Ausströmöffnungen nicht vorgesehen ist.

Die Stoßkanten der textilen Elemente überlappen sich im Bereich der Ausströmöffnungen 39 nicht, um ein ungewolltes Verschließen der Ausströmöffnungen 39 durch Aufeinanderlegen der textilen Lagen zu vermeiden.

Der Luftsack 31 sowie die Packtasche 32 sind im Ausführungsbeispiel jeweils aus einem textilen Material, insbesondere einem Gewebe, gefertigt. Bis auf die oben genannten Verstärkungselemente aus Kunststoff ist der Luftsack bevorzugt ausschließlich aus textilem Material gefertigt.

Die Unterseite des Luftsackes, welche bei der Landung auf dem Boden aufkommt, ist bevorzugt aus einer stabileren Materialbahn gefertigt als die restlichen Bereiche des Luftsacks.

Die einzelnen Aspekte der vorliegenden Erfindung ermöglichen zum einen eine hohe Sicherheit bei der Benutzung der Landehilfe. Zum anderen ermöglichen sie eine besonders leichte und platzsparende Konstruktion der Landehilfe.

## Patentansprüche

1. Landehilfe (30) für einen Fallschirmspringer (10), insbesondere für einen Tandem-Sprung oder die Landung mit schwerem Gepäck,
mit einem Luftsack (31), welcher den Fallschirmspringer (10) bei der Landung schützt,
wobei der Luftsack (31) eine Anströmöffnung (35) aufweist, durch welche hindurch Luft in den Luftsack (31) einströmen kann, um diesen mittels des Fahrtwindes zu füllen,
**dadurch gekennzeichnet,**
**dass** die Landehilfe (30) Beinschlaufen (33) umfasst, mit welchen sie so an den Beinen des Fallschirmspringers (10) befestigbar ist, dass sich der Luftsack (31) nach dem Öffnen zwischen den Beinen des Fallschirmspringers (10) hindurch nach hinten erstreckt, wobei
a) die Beinschlaufen (33) am Luftsack (31) angebracht sind oder
b) die Landehilfe eine fest mit dem Luftsack (31) verbundene Packtasche (32) umfasst, in welcher der Luftsack (31) verstaubar ist, wobei die Packtasche (32) ein Auslöseelement (40) umfasst, mit welchem die Packtasche (32) während des Flugs geöffnet und der Luftsack (31) aktiviert werden kann, wobei die Beinschlaufen (33) unmittelbar an der Packtasche (32) angeordnet sind.

2. Landehilfe nach Option a) von Anspruch 1, wobei die Beinschlaufen (33) durch ein Gurtelement miteinander verbunden sind, und/oder wobei die Landehilfe (30) eine fest mit dem Luftsack (31) verbundene Packtasche (32) umfasst, in welcher der Luftsack (31) verstaubar ist, wobei die Packtasche (32) ein Auslöseelement (40) umfasst, mit welchem die Packtasche (31) während des Flugs geöffnet und der Luftsack (31) aktiviert werden kann, wobei bevorzugt an der Packtasche (32) Gurtelemente (34) zur Verbindung mit einem Gurtzeug (20) des Gleitschirms angeordnet sind.

3. Landehilfe nach Anspruch 1 oder 2, wobei das Auslöseelement (40) ein Bandelement (41) umfasst, welches im verpackten Zustand innerhalb der Packtasche (32) um den Luftsack (31) herumgeht und diesen beim Öffnen aus der Packtasche (32) herausdrückt, und/oder wobei das Auslöseelement (40) ein Sicherungselement (42) umfasst, welches die Packtasche (32) im geschlossenen Zustand sichert, wobei das Sicherungselement (42) bevorzugt im gepackten Zustand durch Schlaufen (43) hindurchgeht, welche durch Ösen der Packtasche (32) hindurchgeschoben sind und die Packtasche (32) im geschlossenen Zustand sichern, und/oder wobei der Luftsack (31) an einer Unterkante der nach unten hin offenen Packtasche (32) angeordnet ist und/oder die Packtasche (32) durch eine Lasche (36) verschließbar ist.

4. Landehilfe nach einem der vorangegangenen Ansprüche, wobei die Anströmöffnung (35) in ihrem Randbereich (53) mit einem Stützelement verstärkt ist, wobei das Stützelement bevorzugt aus Kunststoff besteht und/oder eingenäht ist.

5. Landehilfe nach einem der vorangegangenen Ansprüche, wobei der Luftsack (31) eine oder mehrere Ausströmöffnungen (39) aufweist, wobei die eine oder mehreren Ausströmöffnungen (39) bevorzugt nicht verschließbar ist oder sind und/oder wobei die eine oder mehreren Ausströmöffnungen (39) bevorzugt in einem hinteren und/oder oberen Bereich des Luftsacks (31) angeordnet sind.

6. Landehilfe nach einem der vorangegangenen Ansprüche, wobei die Landehilfe ein Federelement (60) umfasst, durch welches die Anströmöffnung (35) in der richtigen Position bezüglich des Luftstroms gehalten und/oder ein Auspackvorgang des Luftsacks (31) unterstützt wird.

7. Landehilfe nach Anspruch 6, wobei das Federelement (60) in den Luftsack (31) integriert und insbesondere in diesen eingenäht ist.

8. Landehilfe nach Anspruch 6 oder 7, wobei das Federelement (60) einen oder mehrere erste Abstützbereiche (63) umfasst, mit welchen es sich an einem durch den Staudruck innerhalb des Luftsacks (31) in Form gehaltenen Bereich des Luftsacks (31) abstützt, und/oder einen oder mehrere zweite Abstützbereiche (64), mit welchen es eine gegen den Druck des Fahrtwindes wirkende Gegenkraft auf die Anströmöffnung (35) aufbringt.

9. Landehilfe nach einem der Ansprüche 6 bis 8, wobei es sich bei dem Federelement (60) um ein Torsionsfederelement handelt und/oder wobei das Federelement (60) aus Kunststoff besteht, wobei das Federelement (60) bevorzugt eine oder mehrere aus einer Kunststoffplatte ausgeschnittene Torsionsfedern umfasst, insbesondere in Form von Z-förmig aus einer Kunststoffplatte ausgeschnittenen Torsionsfedern.

10. Landehilfe nach Anspruch 9, wobei das Federelement (60) zwei Torsionsfedern umfasst, deren Torsionsachse sich jeweils entlang einer Oberkante der Anströmöffnung (35) erstreckt, wobei die Torsionsfedern jeweils einen ersten Arm (64) aufweisen, welcher sich entlang einer der beiden Seitenkanten der Anströmöffnung erstreckt, und bevorzugt einen zweiten Arm (63), welcher sich oberhalb der Anströmöffnung an einem Bereich des Luftsacks abstützt.

11. Landehilfe nach einem der vorangegangenen Ansprüche, wobei die Anströmöffnung (35) ein Rückschlagventil aufweist, wobei das Rückschlagventil ein im Inneren des Luftsacks (31) angeordnetes Klappenventilelement (50) aufweist, welches auf einer Seite scharnierartig mit dem Luftsack (31) verbunden ist und bei Vorliegen eines entsprechenden Drucks im Luftsack (31) die Anströmöffnung (35) klappenförmig verschließt.

12. Landehilfe nach Anspruch 11, wobei das Klappenventilelement (50) durch ein textiles Element gebildet wird, welches bevorzugt in einem die Anströmöffnung (35) umgebenden Bereich mit einem Stützelement (52) verstärkt ist, wobei das Stützelement (52) bevorzugt aus Kunststoff besteht und/oder eingenäht ist.

13. Landehilfe nach Anspruch 11 oder 12, wobei sich quer über die Anströmöffnung (35) ein Bandelement (54) erstreckt, welches verhindert, dass das Klappenventilelement (50) durch die Anströmöffnung (35) herausgedrückt wird.

14. Landehilfe nach einem der Ansprüche 11 bis 13, wobei das freie Ende des Klappenventilelements (50) durch ein Bandelement (55) gesichert ist, welches eine komplette Öffnung des Klappenventilelements (50) verhindert.

15. Benutzung einer Landehilfe nach einem der vorangegangenen Ansprüche zum Schutz eines Fallschirmspringers (10) bei der Landung, insbesondere für einen Tandem-Sprung oder die Landung mit schwerem Gepäck, wobei der Luftsack (31) bevorzugt vor der Landung geöffnet wird und/oder der Fallschirmspringer (10) auf dem Luftsack (31) sitzend landet.

## Claims

1. Landing aid (30) for a parachutist (10), in particular for a tandem jump or landing with heavy equipment,
having an air bag (31), which protects the parachutist (10) during landing, wherein the air bag (31) has an inflow opening (35) through which air can flow into the air bag (31) in order to fill it by means of the airstream,
**characterized in that**
the landing aid (30) comprises leg loops (33) with which it can be attached to the legs of the parachutist (10) in such a way that the air bag (31) extends backwards between the legs of the parachutist (10) after opening, wherein
a) the leg loops (33) are attached to the air bag (31), or
b) the landing aid comprises a pannier (32) firmly attached to the air bag (31), in which the air bag (31) can be stowed, wherein the pannier (32) comprises a release element (40) for opening the pannier (32) in flight and activating the air bag (31), wherein the leg loops (33) are arranged directly on the pannier (32).

2. Landing aid according to option a) of claim 1, wherein the leg loops (33) are connected to each other by a strap element, and/or wherein the landing aid (30) comprises a pannier (32) firmly attached to the air bag (31), in which the air bag (31) can be stowed, wherein the pannier (32) comprises a release element (40) for opening the pannier (31) in flight and activating the air bag (31), wherein strap elements (34) for connection to a harness (20) of the paraglider are preferably arranged on the pannier (32).

3. Landing aid according to claim 1 or 2, wherein the release element (40) comprises a band element (41), which, in the packed state, surrounds the air bag (31) inside the pannier (32) and presses it out of the pannier (32) when it is opened, and/or wherein the release element (40) comprises a securing element (42), which secures the pannier (32) in the closed state, wherein the securing element (42), in the packed state, preferably passes through loops (43) that are pushed through eyelets of the pannier (32) and secure the pannier (32) in the closed state, and/or wherein the air bag (31) is arranged on a lower edge of the pannier (32), which is open at the bottom, and/or the pannier (32) can be closed by a flap (36).

4. Landing aid according to any one of the preceding claims, wherein the inflow opening (35) is reinforced in its edge region (53) with a support element, wherein the support element is preferably made of plastic and/or sewn in.

5. Landing aid according to any one of the preceding claims, wherein the air bag (31) has one or more outflow openings (39), wherein the one or more outflow openings (39) are preferably not closable, and/or wherein the one or more outflow openings (39) are preferably arranged in a rear and/or upper region of the air bag (31).

6. Landing aid according to any one of the preceding claims, wherein the landing aid comprises a spring element (60), by means of which the inflow opening (35) is held in the correct position with respect to the air flow and/or an unpacking process of the air bag (31) is supported.

7. Landing aid according to claim 6, wherein the spring element (60) is integrated in the air bag (31) and in particular sewn into it.

8. Landing aid according to claim 6 or 7, wherein the spring element (60) comprises one or more first support regions (63) with which it is supported on a region of the air bag (31) held in shape by the dynamic pressure inside the air bag (31), and/or one or more second support regions (64) with which it applies a counterforce to the inflow opening (35) acting against the pressure of the airstream.

9. Landing aid according to any one of claims 6 to 8, wherein the spring element (60) is a torsion spring element and/or wherein the spring element (60) is made of plastic, wherein the spring element (60) preferably comprises one or more torsion springs cut out of a plastic plate, in particular in the form of Z-shaped torsion springs cut out of a plastic plate.

10. Landing aid according to claim 9, wherein the spring element (60) comprises two torsion springs, the torsion axis of which extends along one upper edge of the inflow opening (35) in each case, wherein the torsion springs each have a first arm (64), which extends along one of the two side edges of the inflow opening, and preferably a second arm (63), which is supported above the inflow opening on a region of the air bag.

11. Landing aid according to any one of the preceding claims, wherein the inflow opening (35) has a non-return valve, wherein the non-return valve has a flap valve element (50) arranged inside the air bag (31), which is hinged to the air bag (31) on one side and closes the inflow opening (35) in the form of a flap when there is a corresponding pressure in the air bag (31).

12. Landing aid according to claim 11, wherein the flap valve element (50) is formed by a textile element, which is preferably reinforced with a support element (52) in a region surrounding the inflow opening (35), wherein the support element (52) is preferably made of plastic and/or sewn in.

13. Landing aid according to claim 11 or 12, wherein a band element (54) extends across the inflow opening (35), which prevents the flap valve element (50) from being pressed out through the inflow opening (35).

14. Landing aid according to any one of claims 11 to 13, wherein the free end of the flap valve element (50) is secured by a band element (55), which prevents complete opening of the flap valve element (50).

15. Use of a landing aid according to any one of the preceding claims for protecting a parachutist (10) during landing, in particular for a tandem jump or landing with heavy equipment, wherein the air bag (31) is preferably opened before the landing and/or the parachutist (10) lands sitting on the air bag (31).

## Revendications

1. Dispositif d'aide à l'atterrissage (30) pour un parachutiste (10), en particulier pour un saut en tandem ou l'atterrissage avec des bagages lourds,
comprenant un sac gonflable (31) qui protège le parachutiste (10) lors de l'atterrissage,
dans lequel le sac gonflable (31) présente une ouverture d'entrée d'air (35) à travers laquelle de l'air peut pénétrer dans le sac gonflable (31) afin de remplir celui-ci au moyen du vent relatif,
**caractérisé en ce que**
le dispositif d'aide à l'atterrissage (30) comprend des boucles de jambe (33) au moyen desquelles il peut être fixé aux jambes du parachutiste (10) de telle sorte que, après l'ouverture, le sac gonflable (31) s'étend vers l'arrière en passant entre les jambes du parachutiste (10), dans lequel
a) les boucles de jambe (33) sont fixées au sac gonflable (31), ou
b) le dispositif d'aide à l'atterrissage comprend une sacoche (32) reliée de manière fixe au sac gonflable (31), dans laquelle le sac gonflable (31) peut être rangé, la sacoche (32) comprenant un élément de déclenchement (40) au moyen duquel la sacoche (32) peut être ouverte pendant le vol et le sac gonflable (31) peut être activé, les boucles de jambe (33) étant disposées directement sur la sacoche (32).

2. Dispositif d'aide à l'atterrissage selon l'option a) de la revendication 1, dans lequel les boucles de jambe (33) sont reliées entre elles par un élément de sangle, et/ou dans lequel le dispositif d'aide à l'atterrissage (30) comprend une sacoche (32) reliée de manière fixe au sac gonflable (31), dans laquelle le sac gonflable (31) peut être rangé, la sacoche (32) comprenant un élément de déclenchement (40) au moyen duquel la sacoche (31) peut être ouverte pendant le vol et le sac gonflable (31) peut être activé, des éléments de sangle (34) destinés à la liaison avec un harnais (20) du parapente étant de préférence disposés sur la sacoche (32).

3. Dispositif d'aide à l'atterrissage selon la revendication 1 ou 2, dans lequel l'élément de déclenchement (40) comprend un élément de bande (41) qui, à l'état emballé, entoure le sac gonflable (31) à l'intérieur de la sacoche (32) et expulse celui-ci hors de la sacoche (32) lors de l'ouverture, et/ou dans lequel l'élément de déclenchement (40) comprend un élément de verrouillage (42) qui verrouille la sacoche (32) à l'état fermé, l'élément de verrouillage (42) passant de préférence, à l'état emballé, à travers des boucles (43) qui sont passées à travers des œillets de la sacoche (32) et verrouillent la sacoche (32) à l'état fermé, et/ou dans lequel le sac gonflable (31) est disposé sur un bord inférieur de la sacoche (32) ouverte vers le bas et/ou la sacoche (32) peut être fermée par un rabat (36).

4. Dispositif d'aide à l'atterrissage selon l'une quelconque des revendications précédentes, dans lequel l'ouverture d'entrée d'air (35) est renforcée dans sa zone de bord (53) par un élément de support, l'élément de support étant de préférence constitué de matière plastique et/ou cousu.

5. Dispositif d'aide à l'atterrissage selon l'une quelconque des revendications précédentes, dans lequel le sac gonflable (31) présente une ou plusieurs ouvertures de sortie d'air (39), la ou les ouvertures de sortie d'air (39) n'étant de préférence pas obturables, et/ou la ou les ouvertures de sortie d'air (39) étant de préférence disposées dans une zone arrière et/ou supérieure du sac gonflable (31).

6. Dispositif d'aide à l'atterrissage selon l'une quelconque des revendications précédentes, dans lequel le dispositif d'aide à l'atterrissage comprend un élément de ressort (60) au moyen duquel l'ouverture d'entrée d'air (35) est maintenue dans la position correcte par rapport au flux d'air et/ou un processus de déballage du sac gonflable (31) est assisté.

7. Dispositif d'aide à l'atterrissage selon la revendication 6, dans lequel l'élément de ressort (60) est intégré dans le sac gonflable (31) et en particulier cousu dans celui-ci.

8. Dispositif d'aide à l'atterrissage selon la revendication 6 ou 7, dans lequel l'élément de ressort (60) comprend une ou plusieurs premières zones d'appui (63) par lesquelles il prend appui sur une zone du sac gonflable (31) maintenue en forme par la pression dynamique à l'intérieur du sac gonflable (31), et/ou une ou plusieurs deuxièmes zones d'appui (64) par lesquelles il applique sur l'ouverture d'entrée d'air (35) une contre-force agissant à l'encontre de la pression du vent relatif.

9. Dispositif d'aide à l'atterrissage selon l'une quelconque des revendications 6 à 8, dans lequel l'élément de ressort (60) est un élément de ressort de torsion et/ou dans lequel l'élément de ressort (60) est constitué de matière plastique, l'élément de ressort (60) comprenant de préférence un ou plusieurs ressorts de torsion découpés dans une plaque en matière plastique, en particulier sous la forme de ressorts de torsion découpés en forme de Z dans une plaque en matière plastique.

10. Dispositif d'aide à l'atterrissage selon la revendication 9, dans lequel l'élément de ressort (60) comprend deux ressorts de torsion dont l'axe de torsion s'étend respectivement le long d'un bord supérieur de l'ouverture d'entrée d'air (35), les ressorts de torsion présentant chacun un premier bras (64) qui s'étend le long de l'un des deux bords latéraux de l'ouverture d'entrée d'air, et de préférence un deuxième bras (63) qui prend appui, au-dessus de l'ouverture d'entrée d'air, sur une zone du sac gonflable.

11. Dispositif d'aide à l'atterrissage selon l'une quelconque des revendications précédentes, dans lequel l'ouverture d'entrée d'air (35) présente un clapet anti-retour, le clapet anti-retour présentant un élément de clapet à battant (50) disposé à l'intérieur du sac gonflable (31), qui est relié de manière articulée au sac gonflable (31) sur un côté et qui, en présence d'une pression correspondante dans le sac gonflable (31), ferme l'ouverture d'entrée d'air (35) à la manière d'un battant.

12. Dispositif d'aide à l'atterrissage selon la revendication 11, dans lequel l'élément de clapet à battant (50) est formé par un élément textile qui est de préférence renforcé par un élément de support (52) dans une zone entourant l'ouverture d'entrée d'air (35), l'élément de support (52) étant de préférence constitué de matière plastique et/ou cousu.

13. Dispositif d'aide à l'atterrissage selon la revendication 11 ou 12, dans lequel un élément de bande (54) s'étend transversalement à travers l'ouverture d'entrée d'air (35), lequel empêche que l'élément de clapet à battant (50) soit expulsé à travers l'ouverture d'entrée d'air (35).

14. Dispositif d'aide à l'atterrissage selon l'une quelconque des revendications 11 à 13, dans lequel l'extrémité libre de l'élément de clapet à battant (50) est retenue par un élément de bande (55) qui empêche une ouverture complète de l'élément de clapet à battant (50).

15. Utilisation d'un dispositif d'aide à l'atterrissage selon l'une quelconque des revendications précédentes pour protéger un parachutiste (10) lors de l'atterrissage, en particulier pour un saut en tandem ou l'atterrissage avec des bagages lourds, dans laquelle le sac gonflable (31) est de préférence ouvert avant l'atterrissage et/ou le parachutiste (10) atterrit assis sur le sac gonflable (31).
